# EUROPEAN PATENT APPLICATION

(11) **EP 1 677 540 A1**
(43) Date of publication of application: **05.07.2006**
(21) Application number: 05111615.0
(22) Date of filing: 02.12.2005
(51) Int. Cl.: H04N 7/24, G11B 27/32, G11B 27/10

(54) **Content reproduce system, reproduce device, reproduce method, and distribution server**

(30) Priority: 28.12.2004 JP 2004381790
(71) Applicant: KABUSHIKI KAISHA TOSHIBA, Tokyo 105-8001 (JP)
(72) Inventor: Ukai, Kaoru Toshiba Corp. Intell. Prop. Div., Tokyo (JP)
(74) Representative: Henkel, Feiler & Hänzel

(57) **Abstract**

A content reproduce system for reproducing a content realized from stream data recorded in a storage medium and stream data distributed via a network, the system including: a distribution server for distributing the stream data via the network as data matching a bit rate of the network; and a reproduce device which measures the bit rate of the network, issues to the distribution server a request for data corresponding to the measured bit rate, and synchronously reproduces the stream data transmitted from the distribution server and the stream data read from the storage medium.

## Description

### BACKGROUND OF THE INVENTION

### 1. Field of the Invention

The present invention relates to a reproduce system, a reproduce device, and a reproduce method, all of which are for reproducing a content realized by a plurality of pieces of stream information, as well as to a distribution server.

### 2. Description of the Related Art

A high-density optical disk capable of recording massive amounts of digital data; e.g., a DVD (Digital Versatile Disc), has recently become prevalent. Various types of reproduce systems for reproducing a content prepared from so-called multimedia information, such as digital video information (including stationary images), audio information, or the like, have already been proposed.

In relation to such a content reproduce system, there has been proposed a system capable of making access to desired stream information not only by way of a DVD but also by way of a Web server which is a resource in a computer network, such as the Internet. For example, JP-A-2003-224803 discloses a technique for making a presentation by mutually synchronizing audio or video data read from an interactive optical disk to content information received from a content-providing server.

### BRIEF SUMMARY OF THE INVENTION

However, according to the technique disclosed in JP-A-2003-224803, in order to reproduce the audio or video data read from the optical disk and the content information downloaded from the server by synchronizing the audio/video data and the content information, the system must be on standby until completion of downloading of data from the server. Difficulty is encountered in reproducing, in real time and synchronously, the data downloaded from the server while reading data from the optical disk.

The present invention has been conceived in view of the circumstances, and aims at providing a content reproduce system, a reproduce device, and a reproduce method, all of which enable reproduce of a content by synchronizing, in real time, stream data from a storage medium and stream data from a network, as well as providing a distribution server.

According to an aspect of the invention, there is provided a content reproduce system for reproducing a content realized from stream data recorded in a storage medium and stream data distributed via a network, the system including: a distribution server for distributing the stream data via the network as data matching a bit rate of the network; and a reproduce device which measures the bit rate of the network, issues to the distribution server a request for data corresponding to the measured bit rate, and synchronously reproduces the stream data transmitted from the distribution server and the stream data read from the storage medium.

According to another aspect of the invention, there is provided a content reproduce device which reproduces a content realized by stream data recorded in a storage medium and stream data distributed from a distribution server via a network, the reproduce device including: a controller which measures a bit rate of the network and issues to the distribution server a request for data matching the measured bit rate; and a mixer which synchronously merges the stream data transmitted from the distribution server and the stream data read from the storage medium.

According to still another aspect of the invention, there is provided a reproduce method for reproducing a content realized from stream data recorded in a storage medium and stream data distributed by a distribution server via a network, the method including: distributing the stream data via the network from the distribution server as data matching a measured bit rate of the network; and synchronously reproducing the stream data transmitted from the distribution server and the stream data read from the storage medium.

According to still another aspect of the invention, there is provided a content distribution server for distributing stream data constituting a content via a network, the server including: a data list for each bit rate which is used for distributing the stream data as data matching a bit rate of the network.

The present invention enables reproduce of a content by synchronizing, in real time, stream data from a storage medium and stream data from a network, to thus enable reproduce of a wider variety of contents.

### BRIEF DESCRIPTION OF THE DRAWINGS

Fig. 1 is an overall block diagram of a content reproduce system according to a first embodiment of the present invention;
Fig. 2 is a flowchart of content reproduce processing of the first embodiment;
Fig. 3 is an overall block diagram of a content reproduce system according to a second embodiment of the present invention; and
Fig. 4 is a flowchart of content reproduce processing of the second embodiment.

### DETAILED DESCRIPTION OF THE INVENTION

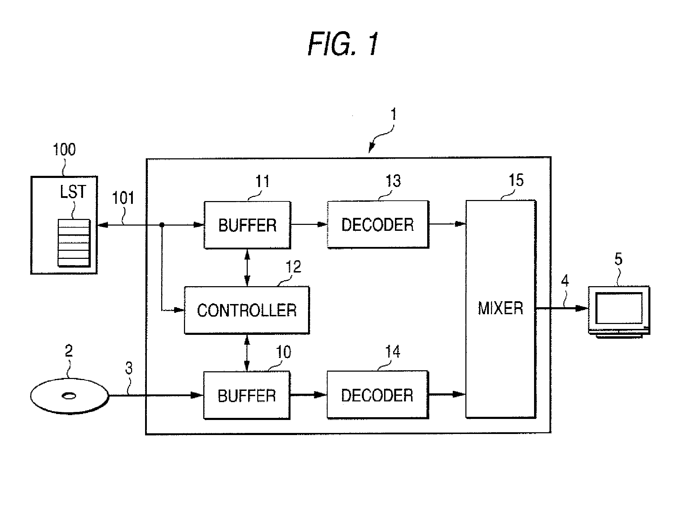

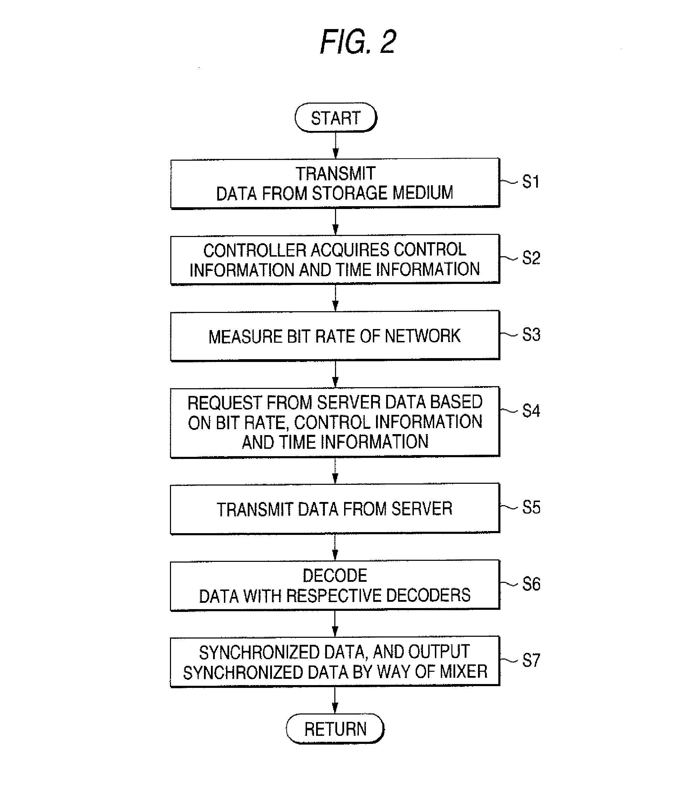

Embodiments of the present invention will be described hereinbelow with reference to the drawings. Figs. 1 and 2 relate to a first embodiment of the present invention. Fig. 1 is an overall block diagram of a content reproduce system, and Fig. 2 is a flowchart showing content reproduce processing.

In Fig. 1, reference numeral 1 designates a reproduce device for reproducing various types of contents formed from video or audio information, or the like. For example, the reproduce device corresponds to a DVD player complying with HDDVD (High Definition Digital Versatile Disc) standards, or a like device. In addition to having an ordinary function of reproducing a content recorded in a storage medium 2, such as a DVD, as a content solely from the storage medium 2, the reproduce device 1 has a function of, even when a single content is formed from the stream data from the storage medium 2 and the stream data downloaded by way of a network 101, reproducing the single content, by synchronizing, in real time, these sets of steam data.

As shown in Fig. 1, the reproduce device 1 has a network connection function, and the reproduce device 1 and a content distribution data server 100 are shown to be connected together by means of the network 101, such as the Internet, to thus form a content reproduce system. In this content reproduce system, the stream data downloaded via the network 101 have a lower bit rate than the stream data of the storage medium 2 transmitted by way of a transmission path 3. An hourly transmission rate varies depending on an individual environment and, hence, is not fixed. For these reasons, a data transmission request is issued from the reproduce device 1 to the data server 100 such that the stream data from the network 101 are synchronized with the stream data from the storage medium 2.

For example, video information (motion picture information), such as a movie, is transmitted from the storage medium 2, whereas a comment, multilanguage-compatible audio information, or the like, is transmitted from the network 101 as an optical content which is not included in the storage medium 2. When the video information and the audio information are combined together to thus form a single content, the reproduce device 1 issues an audio information transmission request to the data server 100 so that the audio information can be played back in synchronism with the video information transmitted from the storage medium 2. The video information from the storage medium 2 and the audio information from the data server 100 are merged together in a synchronous manner. The thus-merged information is output from a transmission path 4 to an output device 5 capable of outputting sound and displaying a video, such as a TV monitor, by way of an output interface.

The data transmitted from the storage medium 2 and the network 101 are not limited to a combination of image data and sound data. The data to be transmitted may be of any of a variety of combinations; for example, a combination of image data from the storage medium 2 and image data superimposed as a sub-screen or a translucent screen based on alpha blend, or the like; a combination of video data and sound data; or a combination of music data and character data.

Specifically, the reproduce device 1 includes, as a basic configuration, a buffer 10 for temporarily storing the data (the data read by way of a drive) transmitted from the storage medium 2 by way of the transmission path 3; a buffer 11 for temporarily storing the data transmitted from the data server 100 by way of the network 101; a controller 12 which acquires control information and time information from the data in the storage medium 2, measures a bit rate of the network 101, and performs control operation such that the data match each other; decoders 13, 14 for decoding the data stored in the respective buffers 10, 11; and a mixer 15 which merges the data decoded by the decoders 13, 14 and outputs the thus-merged data.

Recorded in the storage medium 2 are identification information for specifying a stream complying with the DVD standards, such as a program chain number (a logic unit for reproducing the entirety or a part of a title), a video title number, a cell number, and a chapter number, with respect to a stream encoded by a motion picture encoding scheme or the like (a continuous bit data sequence); control information, such as a navigation command pertaining to data reproduce control; time information (a time stamp) for synchronously reproducing and outputting audio data and video data; or the like.

The controller 12 acquires control information and time information from the storage medium 2; acquires distribution information (URL information for making access to the data server 100) used for acquiring, by way of a network, stream information combined with stream information (scenes) in the storage medium 2; and measures the bit rate of the network 101. Access is made to a corresponding data server 100 through use of the acquired URL information about the data server 100, and a request for transmitting data at a transmission rate corresponding to the current bit rate of the network 101 is sent to the data server 100.

The data server 100 is, e.g., a server set in a content providing company which provides contents by way of the storage medium 2, and the server is connected to the reproduce device 1 by way of the network 101 (may also be connected to the reproduce device 1 by way of a home server set in a home). The content providing company is equipped with the data server 100 which stores distribution information in the storage medium 2 and can output the data compatible with the data in the storage medium 2 at the transmission rate corresponding to the bit rate of the network so that an optional content can be used by way of the network during reproduce of the content in the storage medium 2.

In the embodiment, a data list LST showing a transmittable bit rate is prepared in the data server 100, and data corresponding to the data list LST are stored in the data server 100. For instance, a variety of types of sound data, including high-quality sound data and low-quality sound data, which are encoded in accordance with a bit rate of the network in response to the video data in the storage medium 2, are stored in the data server 100. In accordance with the bit rate of the network 101 transmitted from the reproduce device 1, sound data which can be synchronized with the data in the storage medium 2 are selected from the data list LST, and the thus-selected sound data are transmitted to the reproduce device 1. As a result, the reproduce device 1 can reproduce, in real time, sound data in synchronism with the video data read from the storage medium 2 without being affected by the bit rate of the network 101.

Depending on the capability of the data server 100, it may be the case that the data server 100 stores only the original data pertaining to an optional content corresponding to the content of the storage medium 2 without retaining a variety of types of data corresponding to the bit rate of the network 101 (without retaining the data list LST); and encodes, in real time, the original data so as to assume a transmission rate corresponding to the bit rate transmitted from the reproduce device 1 and transmits the thus-encoded data.

Next, the above-described reproduce operation of the reproduce system will now be described with emphasis placed on operation of the reproduce device 1, by reference to a flowchart shown in Fig. 2. Fig. 2 is an example which shows the flow of overall processing in a time-series manner. Depending on specific processing, parallel processing may be performed steadily.

First, the storage medium 2, such as a DVD, is set in the reproduce device 1. When a reproduce command is issued by means of user's input operation, the reproduce device 1 drives the storage medium 2, whereupon data are transmitted from the storage medium 2 by way of the transmission path 3 (processing S1). At this time, for example, a menu screen or an icon, which displays a main content in the storage medium 2 and an optional content distributed to the main content by way of the network, appears on the output device 5.

When the user has selected reproduce of a content, which is formed by combining the main content in the storage medium 2 with the optional content distributed over the network, processing proceeds to corresponding processing. The controller 12 in the reproduce device 1 acquires, from the data stored in the buffer 10, control information and time information pertaining to reproduce of the storage medium 2 (processing S2). URL information about the corresponding data server 100 is acquired, and the current bit rate of the network 101 is measured through use of test data, ordinary data, or the like (processing S3).

Measurement of the bit rate of the network 101 in processing S3 can be steadily performed without being limited to the timing of measurement in the flowchart shown in Fig. 2. Similarly, acquisition of control information in processing S2 can be performed, so long as data are stored in the buffer 11. Hence, acquisition of control information is steadily performed.

In processing S4 subsequent to processing S2 and S3, a request for data matching the quantity of data transmittable at the current bit rate of the network 101 is sent to the data server 100 on the basis of the bit rate of the network 101 and control information and time information, both pertaining to the storage medium 2. The data matching the quantity of transmittable data can be synchronized with the data transmitted from the storage medium 2. In order to effect synchronization, required data must be transmitted or received within a given period of time. The required data are dependent on the transmission rate of the network 101. Hence, a request for data matching the transmission rate based on the current bit rate is sent to the data server 100.

Upon receipt of the data request from the reproduce device 1, the data server 100 selects the data matching the request from the list by reference to the data list LST possessed by the data server, and transmits the data by way of the network 101 (processing S5). At this time, "points" used for realizing synchronization with the data output from the storage medium 2 are provided at given intervals in the data transmitted from the data server 100 to the reproduce device 1, and data transfer is commenced from one of the points.

When having determined that transfer of data from the network 101 cannot meet transfer of data from the storage medium 2, the reproduce device 1 specifies a point of data which can be synchronized with the data from the storage medium 2, through use of the points, and requests data to the data server 100 from that point.

The points correspond to a kind of a so-called time stamp which is common between the data server 100 and the reproduce device 1. The points may be provided as mutually-corresponding custom-designed code data in the stream data in the data server 100 and the stream data in the storage medium 2. A PTS (Presentation Time Stamp), which is information for managing the time of reproduce output, or a chapter number can be utilized as points of the storage medium 2 corresponding to the points of the data server 100.

The points provided in the data (sound data) in the data server 100 and the points provided in the data (video data) in the storage medium 2 are not necessarily required to be synchronized in the manner of lip-sync. For instance, a point of the data server 100 may be synchronized with a PTS or chapter number in the head of the stream data constituting the content from the storage medium 2 or a point of the data server 100 every predetermined interval between the PTSs or chapter numbers.

When the data that can be synchronized with the data from the storage medium 2 are transmitted from the data server 100 by way of the network 101, the reproduce device 1 stores the data in the buffers 10, 11; decodes the data by means of the decoders 13, 14 (processing S6); and merges the thus-decoded data in synchronism with the mixer 15, to thus output the merged data to the output device 5 (processing S7). During the course of synchronized reproduce of the data from the storage medium 2 and the data from the network 101, the controller 12 steadily monitors the status of the network 101. When fluctuations have arisen in the bit rate, the fluctuations in the bit rate are compensated by appropriately changing the data request to the data server 100.

As mentioned above, in the present embodiment, one content is realized by the data streams separated by the storage medium 2 and the network 101. Moreover, even when fluctuations arise in the bit rate of the network 101, the data from the network 101 can be synchronously played back in real time while data are read from the storage medium 2. Thus, a wider variety of contents can be played back.

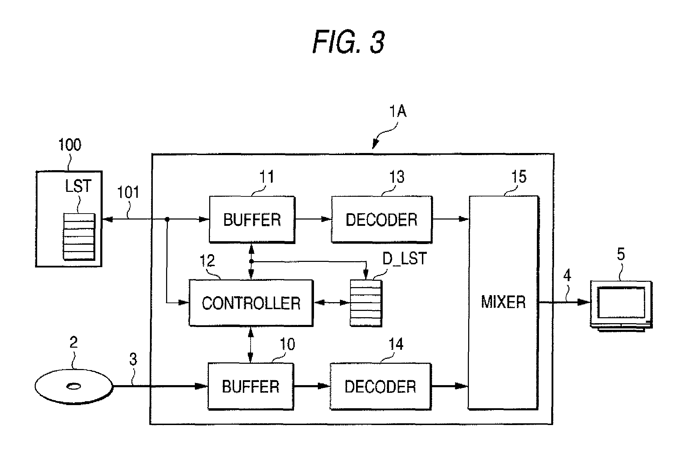

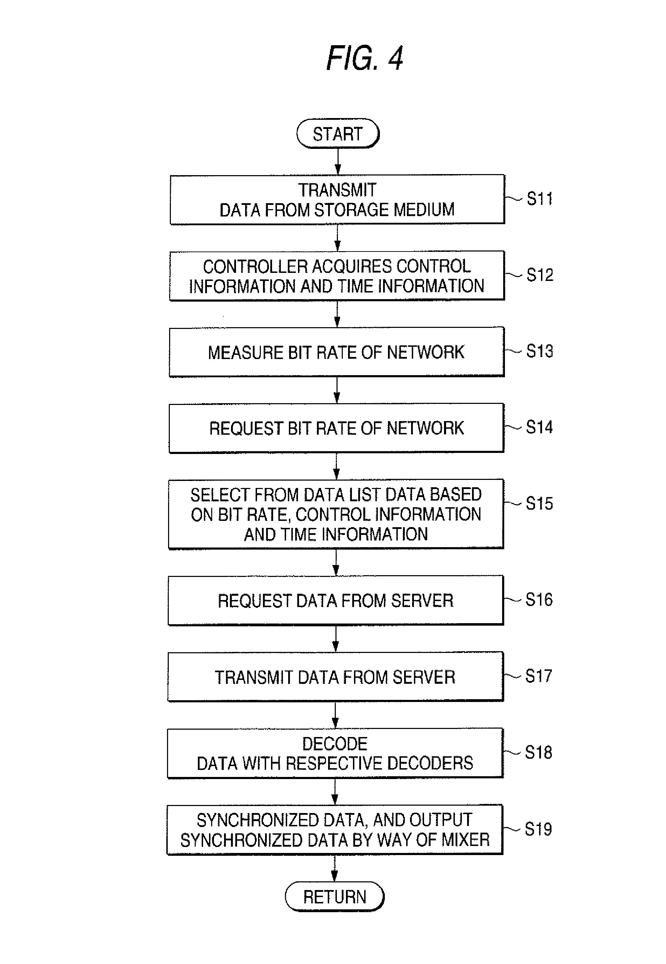

A second embodiment of the present invention will now be described. Figs. 3 and 4 relate to a second embodiment of the present invention. Fig. 3 is an overall block diagram of the content reproduce system, and Fig. 4 is a flowchart showing content reproduce processing.

As shown in Fig. 3, in contrast with the previously-described first embodiment, the second embodiment is for downloading, in advance, the data list LST from the data server 100 in a reproduce device 1A having the same configuration as that of the reproduce device 1 of the first embodiment, prior to reproduce of the content in the storage medium 2. In the reproduce device 1A of the second embodiment, the controller 12 refers to a downloaded data list D_LST, and requests data from the data server 100.

For this reason, in the reproduce system of the second embodiment, processing complying with the flowchart shown in Fig. 4 is performed. As in the case of processing S1, S2, and S3 of the first embodiment, processing shown in Fig. 4 comprises transfer of data from the storage medium 2 by way of the transmission path 3 (processing S11); retaining the data from the storage medium 2 in the buffer 10 of the reproduce device 1A; the controller 12 acquiring control information and time information, both pertaining to reproduce of the storage medium 2, from the data in the buffer 10 (processing S12); and measuring the bit rate of the network 101 (processing S13).

Next, a request for transmission of the data list LST is sent to the data server 100 (processing S14), and the data list LST transmitted from the data server 100 is downloaded. The thus-downloaded data list is retained as the data list D_LST in a memory area of the reproduce device 1A. Data which can be synchronized with the data in the storage medium 2 are selected from the downloaded data list D_LST, on the basis of the bit rate of the network 101 and the control information and time information about the storage medium 2 (processing S15). A request for transmission of corresponding data is issued to the data server 100 (processing S16).

Consequently, when corresponding data are transmitted from the data server 100 pursuant to the data request from the reproduce device 1A (processing S17), the reproduce device 1A, as in the case of the first embodiment, receives the data while ascertaining synchronization between the data streams by means of the points in the data, and stores the data from the storage medium 2 and the data from the network 101 into the buffers 10, 11, respectively. The data in the buffers 10, 11 are decoded by decoders 13, 14 (processing S18). The thus-decoded data are synchronized and merged with each other by means of a mixer 15, and the resultant data are output to the output device 5 (processing S19). During the course of synchronous reproduce of the data from the storage medium 2 and the data from the network 101, the controller 12 steadily monitors the status of the network 101. When fluctuations have arisen in the bit rate, a request for appropriate data is issued to the data server 100 by immediately referring to the data list D_LST, thereby compensating for the fluctuations in the bit rate.

In addition to yielding the same advantage as that yielded in the first embodiment, the second embodiment renders the system more flexible by enabling selection of high-quality sound data with respect to the video from the storage medium 2 in accordance with a user's preference by utilization of the data list D_LST, because the data list D_LST is retained in the reproduce device 1A, even when occurrence of some sound skips is expected.

## Claims

1. A content reproduce system for reproducing a content realized from stream data recorded in a storage medium and stream data distributed via a network, the system comprising:
a distribution server for distributing the stream data via the network as data matching a bit rate of the network; and
a reproduce device which measures the bit rate of the network, issues to the distribution server a request for data corresponding to the measured bit rate, and synchronously reproduces the stream data transmitted from the distribution server and the stream data read from the storage medium.

2. The content reproduce system according to claim 1, wherein the distribution server distributes the stream data via the network as data provided with points for synchronization purpose; and
the reproduce device synchronously reproduces the stream data transmitted from the distribution server and the stream data read from the storage medium through use of the points.

3. The content reproduce system according to claim 1 or 2, wherein the distribution server retains, in advance, data matching the bit rate of the network as data corresponding to a list showing bit rates.

4. The content reproduce system according to claim 1 or 2, wherein the distribution server transmits data matching the bit rate of the network while encoding, in real time, the data in accordance with the measured bit rate transmitted from the reproduce device.

5. A content reproduce device which reproduces a content realized by stream data recorded in a storage medium and stream data distributed from a distribution server via a network, the reproduce device comprising:
a controller which measures a bit rate of the network and issues to the distribution server a request for data matching the measured bit rate; and
a mixer which synchronously merges the stream data transmitted from the distribution server and the stream data read from the storage medium.

6. The content reproduce device according to claim 5, wherein the controller acquires a list of data from the distribution server on a per-bit-rate basis, and by reference to the list issues to the distribution server a request for data matching the measured bit rate.

7. A reproduce method for reproducing a content realized from stream data recorded in a storage medium and stream data distributed by a distribution server via a network, the method comprising:
distributing the stream data via the network from the distribution server as data matching a measured bit rate of the network; and
synchronously reproducing the stream data transmitted from the distribution server and the stream data read from the storage medium.

8. The reproduce method according to claim 7, wherein when distributing the stream data via the network from the distribution server, the stream data provided with points for synchronization purpose are distributed; and
when synchronously reproducing the stream data transmitted from the distribution server and the stream data read from the storage medium, the points are utilized.

9. A content distribution server for distributing stream data constituting a content via a network, the server comprising:
a data list for each bit rate which is used for distributing the stream data as data matching a bit rate of the network.
